# EUROPÄISCHE PATENTSCHRIFT

(11) **EP 2 168 081 B1**
(45) Veröffentlichungstag und Bekanntmachung des Hinweises auf die Patenterteilung: **24.05.2017**
(21) Anmeldenummer: 08784849.5
(22) Anmeldetag: 17.07.2008
(51) Int. Cl.: G06K 19/077

(54) **VORRICHTUNG, VERFAHREN UND VERWENDUNG ZUR MAGNETFELDABSCHIRMUNG EINES RFID-TRANSPONDERS**
APPARATUS, METHOD AND USE FOR SCREENING THE MAGNETIC FIELD OF AN RFID TRANSPONDER
DISPOSITIF, PROCÉDÉ ET UTILISATION PERMETTANT LE BLINDAGE D'UN TRANSPONDEUR RFID CONTRE LES CHAMPS MAGNÉTIQUES

(30) Priorität: 17.07.2007 DE 102007033280; 07.08.2007 DE 102007037293
(43) Veröffentlichungstag der Anmeldung: 31.03.2010
(73) Patentinhaber: Identiv GmbH, 85737 Ismaning (DE)
(72) Erfinder: MIESLINGER, Stefan, 84051 Essenbach (DE); KOBER, Michael, 83052 Bruckmühl (DE)
(74) Vertreter: Bohnenberger, Johannes
(86) Internationale Anmeldenummer: PCT/EP2008/005869
(87) Internationale Veröffentlichungsnummer: WO 2009/010294

(56) Entgegenhaltungen:
- DE-A1- 10 149 126
- US-A- 6 018 298
- US-A1- 2006 255 945

## Beschreibung

Die Erfindung betrifft eine Vorrichtung zur Magnetfeldabschirmung eines RFID-Transponders, sowie ein Verfahren zur Herstellung einer Magnetfeldabschirmung eines RFID-Transponders, sowie die Verwendung einer Vorrichtung zur Magnetfeldabschirmung eines RFID-Transponders nach den Oberbegriffen der Patentansprüche 1, 2, 17, 18 bzw. 32.

Die Verwendung von Transpondern, insbesondere von RFID-Transpondern (Radiofrequenz-Identifikation-Transponder), hat sich bereits in zahllosen Lebens- und Berufsbereichen durchgesetzt. Auf Grund der Eigenschaft von RFID-Transpondern, im Folgenden auch einfach nur Transponder genannt, über elektromagnetische Felder kontaktlos Informationen aufzunehmen, zu verarbeiten und wieder abzugeben, können sie in besonders vorteilhafter Weise dazu beitragen, sog. Medienbrüche zu reduzieren, also Lücken zwischen der realen physischen Welt einerseits und der digitalen Welt der Informationsverarbeitung andererseits. Insbesondere stehen in ihrer Verwendung automatische Identifikationsverfahren im Vordergrund, welche dazu beitragen, betriebswirtschaftliche oder technische Prozesse, sicherheitsrelevante Vorgänge und auch allgemeine Identifikationsprozesse zu verbessern. Typischerweise werden derartige Transponder etwa zur Echtzeitidentifikation in Lieferketten und in Logistikprozessen von Handelsunternehmen, der Pharmaindustrie, der Automobilindustrie und anderen Fertigungsbetrieben eingesetzt und unterstützen die Steuerung und den Ablauf spezifischer Fertigungs- und Logistikabläufe. Typischerweise sind Transponder auf Verpackungen, Paletten und Containern angebracht, so dass sie leicht erreichbar sind und schnell angesprochen werden können.

Die RFID-Technologie basiert typischerweise darauf, dass Seriennummern oder Codes auf einem in einem Transponder integrierten Mikrochip gespeichert sind, wobei der Mikrochip sowohl als elektronischer Datenspeicher, als auch etwa zur Signalverarbeitung eingesetzt werden kann. Die Seriennummern oder die Codes können etwa über drahtlose Kommunikation mittels magnetischer Felder ausgelesen werden. Dazu wird zunächst eine Transponderantenne durch Resonanz mittels eines externen Magnetfeldes aktiviert. Der Transponder wandelt das empfangene Signal in vorbestimmter Weise um und gibt anschließend wieder ein magnetisches Feld ab, bzw. verändert das eingestrahlte so, dass externe Resonatoren in einem Lesegerät dieses Feld detektieren können und folglich das Auslesen von Information erlauben. Dabei findet die Kopplung von Lesegerät und Transponder vergleichbar dem Prinzip des lose gekoppelten Transformators statt. Die Datenübertragung mittels Magnetfeld erfolgt dabei typischerweise im HF Bereich. Moderne RFID-Technologie erlaubt zudem auch mehrere RFID-Transponder gleichzeitig und vollautomatisch auszulesen, ohne dass eine direkte Sichtverbindung zwischen einem Lesegerät und dem RFID-Transpoder bestehen muss. Ebenso erlaubt die RFID-Technologie einen Einsatz in widrigen Umgebungen, indem etwa Transponder in Objekte eingebettet werden, und diese somit von direkten Umgebungseinflüssen nicht direkt beeinflusst werden. Im Vergleich zu Bar-Code Scannern beispielsweise, ist auch ein Auslesen über eine größere Entfernung möglich, wobei zusätzlich noch Informationen auf einem RFID-Transpoder gespeichert und verändert werden können und so einen sehr flexiblen und dynamischen Identifikationsprozess ermöglichen.

Werden derartige RFID-Transponder jedoch auf metallisch leitenden Oberflächen als Untergrund eingesetzt, wird die Funktionalität dieser Vorrichtungen mitunter drastisch reduziert, da es aufgrund der eingesetzten Magnetfelder zur Kommunikation zwischen Transponder und Lesegerät zur Induzierung von Wirbelströmen in dem metallischen Material und mitunter auch in der Antennenstruktur kommt und dadurch die elektrische Erregung der Transponderantenne nicht mit ausreichender Energie erfolgen kann. Durch das Einstrahlen eines magnetischen Wechselfeldes werden nämlich in den Metalloberflächen derart elektrische Wirbelströme induziert, die nach der Lenz'schen Regel ihrerseits ein wechselndes Magnetfeld induzieren, welches dem eingestrahlten Magnetfeld entgegenwirkt. Folglich wird das resultierende Magnetfeld an der metallischen Oberfläche so stark abgeschwächt, dass eine hinreichende Energieversorgung des Transponders und eine Datenübertragung unmöglich werden. Zusätzlich kommt es durch die metallische Oberfläche im Falle eines direkten Kontaktes mit dem elektrisch leitenden Transponder, oder auch bereits bei einer Annäherung an denselben, zu einer deutlichen Verstimmung der Resonanzfrequenz des Transponders, wodurch entweder eine neuerliche Abstimmung des Lesegerätes auf die veränderte Resonanzfrequenz nötig wird, oder aber andere Vorkehrungen getroffen werden müssen, um bei wie üblich fest voreingestellten Resonanzfrequenzen die Kommunikation zwischen Lesegerät und Transponder zu ermöglichen.

Um derartigen Problemen Abhilfe zu schaffen, werden unter anderem mechanische Abstandshalter in Verbindung mit Transpondern auf einer metallischen Oberfläche eingesetzt, welche die Transponder in einer über dem metallischen Material erhöhten Position anbringen. Dadurch wird zwar die Funktionsfähigkeit des Transponders gewährleistet, der Aufbau kann jedoch mitunter eine deutliche Limitierung aufgrund der resultierenden Bauhöhe von Transponder und Abstandhalter darstellen. Abstände von einigen Zentimetern sind für derartige Abstandhalter nicht ungewöhnlich. Zudem können auch die Fertigungskosten für derartige Abstandhalter weit über den Kosten für den eigentlichen Transponder liegen und lassen deshalb diese Technologie für viele Verfahren, in welchen hohe Stückzahlen zum Einsatz kommen, als unattraktiv erscheinen.

Darüber hinaus finden auch dünne kunststoffgebundene Ferrit-Folien zur Magnetfeldabschirmung Einsatz. Die Herstellung einer solchen Ferrit-Folie stellt jedoch hohe Anforderungen an die Homogenität des Verbundmaterials und resultiert deshalb in relativ hohen Kosten für die Herstellung. Nach der Lamination dieses typischerweise zähelastisch, spröden Materials aus Ferrit und Kunststoff entsteht ein steifes und kaum biegbares Etikett mit einer Gesamthöhe von typischerweise wenigstens einem Millimeter. Aufgrund der Steifheit kann die Vorrichtung nur auf planen Oberflächen angebracht werden. Zudem schränken hohe Herstellungskosten und die Dicke der gesamten Vorrichtung das Anwendungsspektrum dieser Magnetfeldabschirmung ein.Die US 6,018,298 beschreibt ein Diebstahlsicherungsschild. Das Schild umfasst eine weichmagnetische Schicht aus einem weichmagnetischen Material. In der DE 100 17 142 A1 wird ein selbstklebendes Datenaustauschetikett beschrieben, welches eine Sende- und Empfangseinrichtung wie eine Transponderantenne vorsieht, wobei ebenfalls ein aufstellbarer Abschnitt vorgesehen ist, mit dessen Hilfe die Antenne in eine Position senkrecht zu einer metallischen Oberfläche gebracht werden kann. Mit dieser Positionierung der Antenne wird der Datenaustausch auf metallischen Oberflächen zwar verbessert, jedoch als Nachteil ergeben sich ein wiederum großer mittlerer Antennenabstand von der metallischen Oberfläche und eine geringe mechanische Stabilität des Datenaustauschetiketts.

Die EP 1 594 082 A1 beschreibt eine Anordnung und ein Verfahren zum Anbringen eines Transponderelements an einem Gegenstand, wie einer metallischen Oberfläche, wobei ein mit Expansions- oder Schrumpffolie versehenes Etikett vorgesehen ist, welches zwischen Oberfläche bzw. Untergrund und Transponder angebracht ist. Nachfolgend wird die Expansions- oder Schrumpffolie durch die Zufuhr von Wärme oder UV-Licht aktiviert, wobei sich der Abstand zwischen Transponder und Oberfläche vorteilhaft einstellen kann, so dass etwa die Verringerung von Wirbelströmen auf einer metallischen Oberfläche resultiert und ein verbessertes Auslesen des Transponders ermöglicht wird. Die beschriebene Vorrichtung zeichnet sich jedoch wiederum durch eine relativ große Bauhöhe aus, und setzt ebenso voraus, dass keine mechanischen Kräfte auf das Etikett einwirken. Zudem kann es durch die Aktivierung durch Wärme oder UV-Licht zu Beeinträchtigungen und Schäden des Gegenstands kommen, auf welchem das Etikett angebracht wurde.

In der DE 101 49 126 A1 werden eine Einrichtung zum Abschirmen eines Transponders und ein Verfahren zur Herstellung einer entsprechenden Abschirmung beschrieben. Die Abschirmung wird unter Verwendung von kleiner, vorzugsweise 300 µm x 50 µm x 10 µm großer Partikel ermöglicht, welche in eine flüssige Matrix eingebettet werden und in einem magnetischen Gleichfeld ausgerichtet werden. Die Ausrichtung erfolgt derart, dass die Partikel parallel zu einem durch den Transponder induzierten Magnetfeld verlaufen. Die Abschirmung wird bevorzugt drucktechnisch auf eine Oberfläche aufgebracht, wobei abschließend die Aushärtung der Druckstrukturen erfolgt. Der Gesamtprozess ist komplex und resultiert in einer spröden und beschränkt flexiblen Abschirmung. Auf Grund des Druckprozesses wird die Anwendung im Normalfall auf ebene Flächen reduziert oder macht ein relativ kompliziertes Druckverfahren notwendig. Die stets parallele Ausrichtung der Partikel zu den induzierten Transpondermagnetfeldlinien erfordert bei komplexen Antennengeometrien aufwendige Magnetisierungseinheiten zur Erzeugung komplexer Magnetfelder. Zudem ist eine hochgenaue Ausrichtung während des Laminationsprozesses zur Verbindung von Transponder und Abschirmung erforderlich, um die Parallelität zwischen dem magnetisch induzierten Transponderfeld und den ausgerichteten Partikeln zu erzielen, wodurch die Massenfertigung deutlich erschwert wird und folglich höhere Kosten für ein Endprodukt entstehen.

Der vorliegenden Erfindung liegt nun die Aufgabe zugrunde, eine Vorrichtung nach der DE 101 49 126 A1 dahingehend weiterzubilden und eine noch effizientere Magnetfeldabschirmung aus einfach handzuhabenden Materialien zu beschreiben, die zudem auch eine Struktur besitzt, welche die erleichterte Ausrichtung von Magnetfeldabschirmung und Antennenstruktur erlaubt. Darüber hinaus sollen ein Verfahren zur Herstellung einer derartigen Magnetfeldabschirmung aufgezeigt und eine Verwendung einer solchen Vorrichtung beschrieben werden.

Diese Aufgabe wird durch eine Vorrichtung, ein Verfahren und eine Verwendung nach den Patentansprüchen 1, 2, 17, 18 bzw. 32 gelöst.

Insbesondere wird die Aufgabe durch eine Vorrichtung zur Magnetfeldabschirmung eines RFID-Transponders gegenüber einem Untergrund gelöst, welche auf einem 1. Flächenabschnitt wenigstens eine flache Antennenstruktur umfasst, die Leiterbahnen zum Leiten von Strom in einer Stromflussrichtung umfasst und eine anwendungsspezifische Ausdehnung aufweist, wobei die Vorrichtung einen 2. Flächenabschnitt oder Träger umfasst, auf welchem Streifen eines hochpermeablen Abschirmungsmaterials in vorbestimmter Weise zueinander ausgerichtet aufgebracht sind, wobei der 2. Flächenabschnitt zu dem 1. Flächenabschnitt parallel angeordnet ist, wobei das hochpermeable Abschirmungsmaterial eine anisotrope Permeabilität aufweist, und wobei eine erhöhte Permeabilität in der Stromflussrichtung wesentlicher Abschnitte der Antennenstruktur vorgesehen ist.

Weiterhin wird die Aufgabe durch eine Vorrichtung zur Magnetfeldabschirmung eines RFID-Transponders gelöst, welcher auf einem 1. Flächenabschnitt wenigstens eine flache Antennenstruktur umfasst, die Leiterbahnen zum Leiten von Strom in einer Stromflussrichtung umfasst und eine anwendungsspezifische Ausdehnung aufweist, wobei die Vorrichtung einen 2. Flächenabschnitt oder Träger umfasst, auf welchem Streifen eines hochpermeablen Abschirmungsmaterials in vorbestimmter Weise zueinander ausgerichtet aufgebracht sind, wobei der 2. Flächenabschnitt zu dem 1. Flächenabschnitt parallel angeordnet ist, wobei die Streifen in wesentlichen Abschnitten zueinander parallel ausgerichtet und durch Freiräume zwischen Längskanten der Streifen beabstandet sind, wobei die Längskanten der Streifen in der Stromflussrichtung, insbesondere in Richtung der Leiterbahnen wesentlicher Abschnitte der Antennenstruktur vorgesehen sind.

Weiterhin wird die Aufgabe durch ein Verfahren zur Herstellung einer Magnetfeldabschirmung eines RFID-Transponders gelöst, welche auf einem 1. Flächenabschnitt wenigstens eine flache Antennenstruktur umfasst, die Leiterbahnen zum Leiten von Strom in einer Stromflussrichtung umfasst und eine anwendungsspezifische Ausdehnung aufweist, wobei das Verfahren das Bereitstellen eines 2. Flächenabschnitts oder Trägers umfasst, auf welchem Streifen eines hochpermeablen Abschirmungsmaterials in vorbestimmter Weise zueinander ausgerichtet aufgebracht sind, wobei der 2. Flächenabschnitt zu dem 1. Flächenabschnitt parallel angeordnet ist, wobei das hochpermeable Abschirmungsmaterial mit einer anisotropen Permeabilität hergestellt wird, wobei das Abschirmungsmaterial derart relativ zur Antennenstruktur ausgerichtet wird, dass sich eine erhöhte Permeabilität in der Stromflussrichtung, insbesondere in Richtung der Leiterbahnen wesentlicher Abschnitte der Antennenstruktur ergibt.

Weiterhin wird die Aufgabe durch ein Verfahren zur Herstellung einer Magnetfeldabschirmung eines RFID-Transponders gelöst, welcher auf einem 1. Flächenabschnitt wenigstens eine flache Antennenstruktur umfasst, die Leiterbahnen zum Leiten von Strom in einer Stromflussrichtung umfasst und eine anwendungsspezifische Ausdehnung aufweist, wobei das Verfahren das Bereitstellen eines 2. Flächenabschnitts oder Trägers umfasst, auf welchem Streifen eines hochpermeablen Abschirmungsmaterials in vorbestimmter Weise zueinander ausgerichtet aufgebracht sind, wobei der 2. Flächenabschnitt zu dem 1. Flächenabschnitt parallel angeordnet ist, wobei die Streifen in wesentlichen Abschnitten zueinander parallel ausgerichtet und durch Freiräume zwischen Längskanten der Streifen beabstandet werden, wobei die Längskanten der Streifen in der Stromflussrichtung, insbesondere in Richtung der Leiterbahnen wesentlicher Abschnitte der Antennenstruktur vorgesehen werden.

Fernerhin wird die Aufgabe durch eine Verwendung einer Vorrichtung zur Magnetfeldabschirmung eines RFID-Transponders gelöst, nach einem der Ansprüche 1 bis 13, zur Verringerung von durch Wirbelstromverluste verursachten Funktionseinbußen des RFID-Transponders.

Ein wesentlicher Punkt der Erfindung liegt darin, dass die Magnetfeldabschirmung ein hochpermeables Abschirmungsmaterial in Streifen umfasst, welche eine anisotrope Permeabilität aufweisen, wobei eine erhöhte Permeabilität in der Stromflussrichtung wesentlicher Abschnitte der Antennenstruktur vorgesehen ist. Durch die Streifenform des Abschirmmaterials werden nicht nur Wirbelströme und die folglich induzierten Magnetfelder unterdrückt, welche beim Einbringen des Transponders in das Magnetfeld eines Lesegerätes in der elektrisch leitfähigen Oberfläche etwa eines metallischen Gegenstandes erzeugt werden, sondern auch Wirbelströme, die durch das Magnetfeld des Lesegerätes in den Streifen selbst induziert werden. Ein weiterer wesentlicher Punkt besteht darin, dass die Streifen des hochpermeablen Abschirmungsmaterials in wesentlichen Abschnitten zueinander parallel ausgerichtet sind und die Längskanten der Streifen in der Stromflussrichtung, insbesondere in Richtung der Leiterbahnen wesentlicher Abschnitte der Antennenstruktur ausgerichtet sind. Hierdurch werden eingestrahlte Magnetfelder sehr vorteilhaft durch die Parallelstruktur der Streifen abgelenkt, tragen also ebenso zu einer Reduzierung der Wirbelströme bei, vermögen zudem aber auch aufgrund ihrer geometrischen Form und Anordnung die Ummagnetisierungsverluste unter Einstrahlung eines Magnetischen Wechselfeldes zu beeinflussen.

Hier, wie in allen weiteren Teilen soll Parallelität als eine rein lokale, punktuelle Parallelität verstanden werden. Folglich kann auch von Parallelität gesprochen werden, wenn die Streifen keine geraden Seitenkanten aufweisen. In dem hier verwendeten Sinn kann Parallelität auch beispielsweise zwischen gewellten Linien oder Kreissegmenten auftreten, wenn die Beabstandung zwischen den Seitenkanten zweier benachbarter und beabstandeter Streifen konstant ist, also die Tangenten an den Seitenkantenlinien zweier Streifen in jedem zueinander nächsten Punkt eine gleiche Steigung aufweisen.

Es wird eine Magnetfeldabschirmung beschrieben, welche dazu vorgesehen ist, die magnetischen Primär- sowie mögliche Sekundärfelder mittels eines hochpermeablen Materials umzulenken bzw. abzuschwächen, so dass die Abschwächung des Magnetfeldes auf der Oberfläche eines metallisch leitenden Materials verringert oder sogar unterbunden wird. Die Orientierung der Anisotropie der Permeabilität des Abschirmungsmaterials, bzw. die Ausrichtung der Streifen des Abschirmungsmaterials erfolgt dabei so, dass das magnetische Primärfeld derart umgelenkt wird, dass die durch das umgelenkte magnetische Primärfeld induzierten elektrischen Felder senkrecht auf wesentlichen Abschnitten der Antennenstruktur stehen und folglich den Stromfluss in der Antennenstruktur, welcher in einer dazu senkrechten Richtung erfolgt, nicht beeinträchtigen können. Ebenso wird das magnetische Sekundärfeld teilweise derart umgelenkt, dass keine signifikanten Abschwächungen des eingestrahlten magnetischen Primärfeldes entstehen können.

Bei einer ersten Ausführungsform der Erfindung sind die Streifen im Wesentlichen zueinander parallel ausgerichtet und durch Freiräume zwischen Längskanten der Streifen beabstandet. Eine derartige Ausrichtung der Streifen ermöglicht es, geometrisch relativ klare Strukturen zu schaffen, welche eine erleichterte Ausrichtung einer angepassten Antennenstruktur erlaubt. Außerdem erlauben die Freiräume, hochpermeables Abschirmungsmaterial im Vergleich zu einer vollflächigen Ausführungsform einzusparen und dennoch einen guten Abschirmungseffekt zu bewirken. Diese Materialeinsparung ist vor allem bei der Herstellung von hohen Stückzahlen der Magnetfeldabschirmung wirtschaftlich überaus wichtig. Weitaus entscheidender jedoch ist, dass die Streifen selbst zur Unterdrückung von elektrischen Wirbelströmen etwa aus elektrisch leitenden Abschirmungsmaterialien beitragen.

Ebenso können die Streifen einen weiterhin bündelnden Effekt in Bezug auf das Magnetfeld aufweisen, etwa dann, wenn das eingestrahlte Magnetfeld eines Lesegerätes nicht senkrecht auf die Oberfläche der Streifen einfällt, sondern in einem Winkel. Vor allem wirkt sich dieser Effekt auch auf die Ummagnetisierungsverluste aus, welche bei Einstrahlung eines magnetischen Wechselfeldes im dem Abschirmungsmaterial hervorgerufen werden.

Eine ferner vorteilhafte Ausführungsform der Vorrichtung zur Magnetfeldabschirmung zeichnet sich dadurch aus, dass das Abschirmungsmaterial eine elektrische Leitfähigkeit aufweist, die geringer ist, als die eines Untergrundes, auf welchen die Magnetfeldabschirmung aufgebracht werden kann. Folglich können in dem Abschirmungsmaterial im Vergleich zum Untergrund, etwa einer Metallfläche, nur in begrenztem Umfang Wirbelströme auftreten und ein entsprechendes Gegenfeld erzeugt werden. Die elektrische Leitfähigkeit des Abschirmungsmaterials kann ebenso sehr gering sein, mit der Folge, dass die Wirbelströme noch weiter unterdrückt werden können.

Eine weiter vorteilhafte Ausführungsform der Vorrichtung zur Magnetfeldabschirmung zeichnet sich dadurch aus, dass das Abschirmungsmaterial eine elektrische Leitfähigkeit aufweist, die geringer als die Leitfähigkeit des Materials der Antennenstruktur ist. Hierdurch wird bewirkt, dass die Wirbelstromverluste in dem Abschirmungsmaterial selbst gering gehalten werden und zu keinen zu großen Verlusten oder zu einer Abschwächungen der magnetischen Felder führen. Zudem werden auch mögliche Verstimmungen der Resonanzfrequenz der Antennenstruktur des Transponders vermindert, welche sich dadurch ergeben können, dass die Streifen als Zusatzkapazität der Antennenstruktur des Transponders wirken und eine Veränderung der Resonanzfrequenz herbeiführen. Solche Frequenzverstimmungen werden normalerweise entweder durch zusätzliche elektronische Bauteile behoben, welche mit dem Transponder verschaltet sind, oder durch Einfügen einer weiteren externen, nicht verschalteten Kapazität, etwa in dem Träger auf welchem Streifen und Transponder zusammen angeordnet sind. Derartige Korrekturen müssen in kleinem Ausmaß typischerweise in jedem Fall durchgeführt werden, um eine Verstimmung der Transponderresonanzfrequenz durch die Streifen zu beheben. Obwohl das Abschirmungsmaterial der Streifen elektrisch leitend sein kann, schließt dieses Merkmal den Umstand nicht aus, dass seine Leitfähigkeit geringer als die Leitfähigkeit des Materials der Antennenstruktur ist.

Eine bevorzugte Ausführungsform der Vorrichtung zur Magnetfeldabschirmung kann sich ferner dadurch auszeichnen, dass das Abschirmungsmaterial einen spezifischen Widerstand von wenigstens 10⁻⁸ Ωm und von höchstens 10⁻² Ωm hat. Der spezifische Widerstand eignet sich in den meisten Fällen, ein Material als Leiter (<10⁻⁶ Ωm), Halbleiter (von 10⁻⁶ Ωm bis 10¹⁰ Ωm) oder Isolator (>10¹⁰ Ωm) zu klassifizieren. Die Einteilung weist dabei jedoch keine absoluten Grenzen auf und ist vorwiegend als praktisches Einteilungskriterium zu betrachten. Der Hauptgrund dafür ist die Temperaturabhängigkeit des elektrischen Widerstands, vor allem bei Halbleitern. Entsprechend der für unterschiedliche Materialien typischen Werte der spezifischen Widerstände, erstreckt sich vorliegend das Abschirmungsmaterial über einen Wertebereich, welcher sowohl für Leiter als auch für Halbleiter charakteristisch ist. In jedem Falle kann jedoch eine elektrische Grundleitfähigkeit des Abschirmungsmaterials gewährleistet werden. Damit unterscheidet sich das Abschirmungsmaterial von sehr schlecht oder nicht leitenden Abschirmungsmaterialien, wie etwa Ferriten, welche zwar auch eine hohe Permeabilität aufweisen können, jedoch nicht die Leitfähigkeit des vorliegenden Abschirmungsmaterials.

Weiterhin ist es möglich, dass das Abschirmungsmaterial Eisen, Nickel, Kobalt, Gadolinium, Verbindungen der Stoffgruppe der Granate, wie Yttrium-Aluminium-Verbindungen, Legierungen aus den genannten Stoffen oder Samarium oder amorphe Metalle umfasst. Denkbar sind aber auch andere ferromagnetische Metalle, Stoffe und Verbindungen als Abschirmungsmaterial mit ähnlich hochpermeablen Eigenschaften. Diese Stoffe und Verbindungen, oder Gemische von diesen, welche sich durch eine hohe absolute magnetische Permeabilität auszeichnen, können vorteilhaft dafür eingesetzt werden, eine erhöhte Permeabilität des Abschirmungsmaterials der Magnetisierungsabschirmung zu gewährleisten. Da es sich bei diesen Stoffen oder Verbindungen um industriell weit verbreitete Materialien handelt, ermöglichen sie eine kostengünstige Herstellung der Streifen des Abschirmungsmaterials. Das Abschirmungsmaterial kann dem entsprechend aus industriell in großem Maßstab hergestellte Materialien gewonnen werden, bei deren Herstellung man sich einfacher, gut zu kontrollierender Verfahren bedienen kann.

In einer bevorzugten Ausführungsform kann das Abschirmmaterial ein weichmagnetisches Metall mit geringen Ummagnetisierungsverlusten, insbesondere ein µ-Metall, umfassen. µ-Metall sind metallische Materialien, welche sich sowohl durch eine hohe Permeabilität auszeichnen als auch durch ihre weichmagnetischen Eigenschaften. Ein derartiges weichmagnetisches Material bietet die Vorteile, dass sich die Energieverluste bei der Ummagnetisierung in einem magnetischen Wechselfeld im Vergleich zu einem normalen Metall oder einem hartmagnetischen Metall deutlich verringert sind. Magnetisierungsverluste treten normalerweise durch die Arbeit auf, welche ein magnetisches Feld verrichten muss, um die Restmagnetisierung in einem magnetisierten Material umzumagnetisieren, also durch die Ummagnetisierungsverluste. Durch die Reduzierung der Magnetisierungsverluste in dem Abschirmungsmaterial der Streifen etwa, lässt sich erreichen, dass zur Kommunikation zwischen Transponder und Lesegerät Magnetfelder von geringerer Intensität eingesetzt werden können, bzw. bei gleicher Intensität die Reichweite für eine effektive Kommunikation zwischen Transponder und Lesegerät vergrößert werden kann.

In einer weiterhin bevorzugten Ausführungsform umfasst das Abschirmungsmaterial nano-kristalline Strukturen. Nano-kristalline Strukturen können sich mitunter durch sehr hohe absolute Permeabilitäten auszeichnen, wobei die Permeabilitätszahlen teilweise deutlich über 100.000 liegen. Zudem weisen kristalline Strukturen eine geometrische Vorzugsrichtung auf, welche ein Identifizieren und Ausrichten der Permeabilität erleichtern kann.

In einer vorteilhaften Ausführungsform sind die Streifen flexibel ausgebildet und weisen eine Dicke von weniger als 500 µm, vorzugsweise weniger als 100 µm, insbesondere weniger als 50 µm, auf. Durch eine flexible Ausführung der Streifen wird auch die Aufbringung der Streifen auf Oberflächen unterstützt, die nicht eben sind, sondern etwa eine Krümmung aufweisen. Zudem können mechanische Beschädigungen der Streifen verringert, bzw. durch deren Flexibilität deren mechanische Belastbarkeit erhöht werden, wenn beispielsweise unvorhergesehene Krafteinwirkungen auf das Abschirmungsmaterial auftreten. Durch die vorgesehene Dicke der Streifen wird gewährt, dass der Transponder nicht in einer wesentlich erhobenen Position über der Oberfläche angeordnet ist, auf welcher der Transponder zusammen mit der Magnetfeldabschirmung angebracht wird. Dies kann sich vor allem dann als vorteilig erweisen, wenn das Raumangebot für die Vorrichtungen zur Magnetfeldabschirmung beschränkt ist.

Eine alternative Ausführungsform kann sich weiter dadurch auszeichnen, dass die Streifen in mehreren, durch Isolatorschichten getrennten Schichten übereinander angeordnet sind. Hierdurch ist es möglich, die Magnetfeldabschirmung sogar noch zu erhöhen und eine noch effektivere Magnetfeldabschirmung durch eine additive Abschirmungswirkung mehrerer Schichten zu gewährleisten. Die Datenübertragung kann folglich effektiver ausgeführt werden, bzw. über eine größere Reichweite erfolgen.

Weiterhin kann der Träger aus einem im Wesentlichen elektrisch nicht-leitenden Material bestehen. Der Träger besitzt somit elektrisch isolierende Eigenschaften, welche vor allem dann vorteilhaft sein können, wenn der Träger beispielsweise mit der elektrisch leitenden Antennenstruktur in Kontakt steht, um Kurzschlüsse oder Verstimmungen der Resonanzfrequenz der Antennenstruktur zu unterdrücken, bzw. zu minimieren.

Weiterhin können der Träger und/oder die Isolatorschichten auch ein Material aufweisen, welches im Wesentlichen eine kleine relative Permittivität εᵣ hat. Als kleine relative Pertmittivität werden vorliegend Werte von εᵣ = 1 bis 100, insbesondere von εᵣ = 1 bis 5 und weiterhin insbesondere von εᵣ = 1 bis 2 betrachtet. Die relative Permittivität εᵣ kennzeichnet die feldschwächenden Effekte der dielektrischen Polarisation innerhalb elektrisch isolierender Materialien. Wird etwa ein elektrisches Feld an einen mit einem isolierenden Material gefüllten Kondensator eingebracht, orientieren sich die Ladungsträger des Isolationsmaterials entsprechend dem elektrischen Feld und bilden ein Polarisationsfeld, das dem äußeren Feld entgegenwirkt und dieses schwächt. Ist diese Schwächung wie im vorliegenden Falle klein, kann eine kapazitive Wechselwirkung zwischen der Antenne und den Streifen des Abschirmungsmaterials und/oder zwischen den Streifen des Abschirmungsmaterials und dem Untergrund, auf welchen die Magnetfeldabschirmung aufgebracht ist, vermindert werden.

Ferner ist möglich, dass der Träger als Inlay eines Transponders ausgebildet ist. Dies ermöglicht die sichere und geschützte Verwahrung des Transponders und ermöglicht ebenso ohne Komplikationen eine schnelle und eindeutige Verbindung des Transponders mit dem Inlay.

In einer bevorzugten Ausführungsform ist der Träger mit dem auf ihm befestigten Transponder in Kunststoff, Papier oder Folienlaminat eingeschlossen, wobei vorzugsweise wenigstens eine Isolatorschicht zwischen Träger und Transponder vorgesehen ist. Der Einschluss in Kunststoff, Papier oder Folienlaminat ermöglicht die Herstellung von ganzen Transponder-Magnetfeldabschirmung-Einheiten, welche zum einen gegen äußere Einflüsse gut geschützt sind, welcher aber auch durch entsprechende Formgebung so gefertigt werden können, dass sie jeder räumlichen Anforderungen angepasst sind.

Die Vorrichtung zur Magnetfeldabschirmung kann sich auch noch dadurch auszeichnen, dass ein Flächenabschnitt, welcher von den Streifen auf dem 2. Flächenabschnitt eingenommen wird, mindestens so groß wie der 1. Flächenabschnitt ist und diesen überdeckt. Eine solche Vorrichtung gewährleistet eine möglichst vollständige Abschirmung der Transponderantennenstruktur und bewirkt folglich eine flächig best mögliche Magnetfeldabschirmung.

In einer weiter vorteilhaften Ausführungsform kann die Vorrichtung derart ausgebildet sein, dass der Transponder im HF-Frequenzbereich, insbesondere bei 13,56 MHz arbeitet. Ein solcher Transponder hat im Vergleich zu den ebenso gefertigten Transpondern, die im LF-Bereich (Low Frequency Bereich) bei 135 kHz arbeiten, den großen Vorteil, dass die Antennenstruktur zur induktiven Kopplung mit dem Lesegerät weitaus weniger Antennenwindungen benötigt, also deutliche Raumersparnisse zur Folge hat. Bei Transpondern hingegen, die in den UHF-Frequenzbereichen von 868 MHz, 915 MHz und 2,45 GHz und 5,8 GHz arbeiten, findet die Kopplung zwischen Lesegerät und Tranponder nicht über magnetische sondern über elektromagnetische Kopplung statt. Derartige UHF-Transponder sind jedoch nicht universell einsetzbar, da Ihre erlaubten Arbeitsfrequenzen sich regional stark unterscheiden. Produkte, welche beispielsweise in einem Land ohne weiteres über einen 868MHz-Transponder identifiziert werden könnten, können in einem anderen Land unter Umständen bei 868 MHz nicht identifiziert werden, da die erlaubten Frequenzbereiche der eingesetzten elektromagnetischen Strahlung, nicht mit der Resonanzfrequenz der Antennenstruktur des Transponders übereinstimmt. Handelt es sich bei dem verwendeten Transponder jedoch um ein einen HF-Transponder, so kann dieser universell und unabhängig von seinem Aufenthaltsort ausgelesen werden, da zu seinem Auslesen lediglich Energie in Form von magnetischen Wellen nötig ist und der bezeichnete Frequenzbereich international erlaubt und standardisiert ist.

Das Verfahren zur Herstellung einer Magnetfeldabschirmung kann sich in einer bevorzugten Ausführungsform dadurch auszeichnen, dass die Streifen im Wesentlichen zueinander parallel ausgerichtet und durch Freiräume zwischen Längskanten der Streifen beabstandet werden. Eine derartige Ausrichtung der Streifen ermöglicht es, geometrisch relativ klare Strukturen zu schaffen, welche eine erleichterte Ausrichtung der Antennenstruktur erlauben.

Eine fernerhin vorteilhafte Ausführungsweise des Verfahrens zur Herstellung einer Magnetfeldabschirmung zeichnet sich dadurch aus, dass das Abschirmungsmaterial eine elektrische Leitfähigkeit aufweist, die geringer ist, als die eines Untergrundes, auf welchen die Magnetfeldabschirmung aufgebracht werden kann. Folglich können in dem Abschirmungsmaterial, welches beispielsweise in der Form paralleler Streifen vorliegt, im Vergleich zum Untergrund, etwa einer Metallfläche, nur in begrenztem Umfang Wirbelströme auftreten und ein entsprechendes Gegenfeld erzeugt werden. Die elektrische Leitfähigkeit des Abschirmungsmaterials kann ebenso sehr gering sein, mit der Folge, dass die Wirbelströme noch weiter unterdrückt werden können.

Ebenso können die Streifen einen weiterhin bündelnden Effekt in Bezug auf das Magnetfeld aufweisen, etwa dann, wenn das eingestrahlte Magnetfeld eines Lesegerätes nicht senkrecht auf die Oberfläche der Streifen einfällt, sondern in einem Winkel. Vor allem wirkt sich dieser Effekt auch auf die Ummagnetisierungsverluste aus, welche bei Einstrahlung eines magnetischen Wechselfeldes im dem Abschirmungsmaterial hervorgerufen werden.

In einer alternativen Ausführungsweise des Verfahrens werden die Streifen durch Ätzen eines vollflächigen Abschirmungsmaterials hergestellt. Damit ist ebenso wieder gewährleistet, dass die Streifen industriell in kurzer Zeit mit einem gut kontrollierbaren Verfahren in hohen Stückzahlen hergestellt werden können. Zudem erlaubt dieses Verfahren auch die Einhaltung sehr genauer Vorgaben zu den Abmessungen, bzw. Widergabe sehr feiner Strukturen, wenn etwa in Verbindung mit ihm ein lithographisches Verfahren eingesetzt wird, das eine hervorragende optische Auflösung ermöglicht.

Das vollflächige Abschirmungsmaterial kann in einer weiteren bevorzugten Ausführungsform auf den Träger in einem Rolle-zu-Rolle Prozess auflaminiert werden. Rolle-zu-Rolle Prozesse sind gängige industrielle Verfahren, welche wiederum die Herstellung großer Stückzahlen an Magnetfeldabschirmungen erlauben. Als Trägersubstanzen eignen sich beispielsweise organische Folien oder Papier. Die Erzeugung der Streifen erfolgt typischerweise in einem nächsten Prozessschritt, welcher etwa lithographische oder drucktechnische Verfahren, wie Siebdruck, Schablonendruck, Tampondruck oder Transferdruck, benutzt. Hierbei kann in Standardverfahren die Erzeugung beliebiger Anordnungen an Streifen ausgeführt werden, welche in beliebiger Richtung zu dem vollflächigen Abschirmungsmaterial anordenbar sind. Ein Druckprozess bietet zudem noch den Vorteil kurzer Rüstzeiten, also hoher Flexibilität bei Designänderungen bei geringen Werkzeugkosten und dem Vorhandensein einer breiten Infrastruktur für die Rolle-zu-Rolle Verarbeitung. Vor Erzeugung der Streifen wird das vollflächige Abschirmungsmaterial mit einem Muster bedruckt, welches die Anordnung der Streifen wiedergibt. Falls diese bereits mit dem Träger verbunden sind, wird der Träger mit einem Schutzlack versehen. Nach dem Härten des Schutzlackes, welches beispielsweise durch Wärmekonvektion, elektromagnetische Strahlung oder durch Feuchte initiiert werden kann, durchläuft das bedruckte vollflächige Abschirmungsmaterial verschiedene Ätz- und Reinigungsbäder, in welchen die eigentliche Herstellung der Streifen erfolgt. Hierbei wäre auch denkbar, dass der verwendete Schutzlack später als Laminationsklebestoff und/oder elektrischer Isolator dienen kann.

Alternativ hierzu kann das Verfahren auch vorsehen, dass die Streifen auf den Träger in einem Rolle-zu-Rolle Prozess auflaminiert werden. Anstelle der Erzeugung der Streifen nach dem Aufbringen des vollflächigen Materials auf den Träger ist es auch möglich, die Streifen bereits vor deren Aufbringen zu erzeugen. Zur Erzeugung der Streifen können vorzugsweise wieder lithographische oder drucktechnische Verfahren, wie Siebdruck, Schablonendruck, Tampondruck oder Transferdruck, wie oben beschreiben, eingesetzt werden. Da der Träger im ausführungsgemäßen Verfahren nicht etwa durch einen Schutzlack gegen die Einwirkung von chemischen Substanzen geschützt werden muss, welche zur Erzeugung der Streifen nötig sein können, können in vorliegendem Verfahren Herstellungsschritte entfallen und das gesamte Verfahren kann beschleunigt werden.

Alternativ hierzu kann das Verfahren enthalten, dass die Streifen durch ein spanendes, mechanisches Formgebungsverfahren hergestellt werden. Hierbei wären beispielsweise Schneid- oder Fräsverfahren anzuführen, welche eine Materialabtragung erlauben und Streifen ebenso in den industriell nötigen Stückzahlen herstellen können. Zudem sind durch spanende Verfahren praktisch alle Werkstoffe bearbeitbar.

Weiterhin alternativ hierzu werden die Streifen durch ein nichtspanendes mechanisches Formgebungsverfahren hergestellt. Hierzu sind etwa Walz- oder Stanzverfahren zu rechnen, welche vorwiegend für die Verarbeitung weicher Abschirmungsmaterialien Einsatz finden. Mittels gut kontrollierbarer industrieller Walzverfahren ist ferner die Dicke der herzustellenden Streifen problemlos bis zu Dicken von wenigen µm und sogar noch geringerer Dicken möglich. Damit lassen sich mechanisch sehr dünne Schichten von Abschirmungsmaterialien fertigen, welche folglich äußerst vorteilhaft in der Herstellung von Magnetfeldabschirmungen äußerst geringer Dicken mit sehr geringem Materialaufwand eingesetzt werden können.

Überdies können die Streifen durch ein nasschemisches Verfahren hergestellt werden. Nasschemische Verfahren haben den Vorteil, dass mit ihnen Schichten äußerst geringer Dicken direkt auf einen Träger aufgebracht werden können und zudem möglicherweise keine spezielle Verbindung von Träger und Streifen für eine feste Verbindung nötig ist. Außerdem erlauben nasschemische Verfahren auch mit einfachen Mitteln relativ komplexe Streifenstrukturen herzustellen. Überdies können sie auch vorteilhaft mit weiteren Anwendungsschritten zur Herstellung der Streifen kombiniert werden. So ist es beispielsweise denkbar, ein nasschemisches Verfahren in einem magnetischen Richtfeld auszuführen, um somit in einem Verfahrensschritt die Streifen herzustellen und eine Anisotropie der Permeabilität des Abschirmungsmaterials herbeizuführen.

Als weitere Alternative ist auch denkbar, dass die Streifen durch physikalisches oder chemisches Abscheiden des Abschirmungsmaterials auf dem Träger hergestellt werden. Auch derartige Verfahren ermöglichen, die direkte Verbindung von Träger und Streifen, sowie die Herstellung von Streifen, sehr geringer Dicke etwa aus der Gasphase heraus. Da es sich etwa bei den Abscheidungsverfahren CVD (Chemical Vapour Deposition) oder PVD (Physical Vapour Deposition) um industriell weit verbreitet Verfahren handelt, die darüber hinaus eine hohe Konformität der erzeugten Abscheidungen garantieren, können mit diesen Verfahren beispielsweise leicht Streifen in hohen Stückzahlen kostengünstig hergestellt werden.

In einer bevorzugten Ausführungsform des Verfahrens wird die Anisotropie der Permeabilität des hochpermeablen Materials mittels eines magnetischen Richtfeldes induziert oder verstärkt. Dieses Verfahren erlaubt, auch Gemische von Stoffen oder Partikeln mit intrinsischer Anisotropie der Permeabilität zur Herstellung der Streifen zu verwenden, welche etwa zunächst suspendiert vorliegen, entsprechend ihrer magnetischer Permeabilität ausgerichtet werden und anschließend in ausgerichteter Position in ihrer Position fixiert werden. Hierbei ist etwa der Einsatz von Harzen denkbar, in welchen Ferrit-Partikel suspendiert sind und nach Ausrichtung mittels eines magnetischen Richtfeldes durch Wärme oder Licht bestimmter Wellenlängebereiche ausgehärtet werden. Denkbar wäre eine Herstellung der Streifen durch drucktechnische Verfahren.

In einer alternativen Ausführungsform erfolgt die Fixierung der Streifen auf dem Träger mittels eines Klebers oder eines Lackes. Derartige Fixierungsmittel sind billig und leicht verfügbar, erlauben also einen relativ kostengünstigen Herstellungsprozess, der darüber hinaus noch leicht zu kontrollieren ist.

Ferner ist auch möglich, dass der Träger nach dem Fixieren der Streifen auf ihm mit dem Transponder verbunden wird. Diese Vorgehensweise erlaubt beispielsweise, eine Magnetfeldabschirmung separat herzustellen, also teilweise unabhängig von den Antennenstrukturen des Transponders und als selbstständiges Produkt zu vertreiben.

Alternativ hierzu ist auch möglich, dass der Träger vor dem Fixieren der Streifen auf ihm mit dem Transponder verbunden wird. Diese Herstellungsweise würde etwa dann eingesetzt werden können, wenn die Einheit aus Streifen, Träger und Transponder als Ganzes in einem Fertigungsprozess hergestellt und vertrieben werden soll.

Es ist fernerhin denkbar, dass die Verbindung von Transponder und Vorrichtung zur Magnetfeldabschirmung mittels Falten, Laminieren oder eines Verkapselungsverfahrens erfolgt. Diese Verfahren erlauben wiederum relativ einfache Standardverfahren anzuwenden, wie sie etwa für die Herstellung von Scheckkarten bekannt sind, um eine Einheit aus Transponder und Magnetfeldabschirmung herzustellen, welche in geschützter Form vorliegt.

Weitere Ausführungsformen der Erfindung ergeben sich aus den Unteransprüchen.

Nachfolgend wird die Erfindung anhand von Ausführungsbeispielen beschreiben, die anhand der Abbildung näher erläutert werden. Hierbei zeigen:
Fig. 1 eine erste Ausführungsform der Erfindung in Aufsicht,
Fig. 2 die erste Ausführungsform der Erfindung in Aufsicht mit einem oberflächlich angebrachten Transponder von rechteckiger Geometrie,
Fig. 3 eine Schnitt entlang der Linie III - III aus Fig. 2,
Fig. 4 eine zweite Ausführungsform der Erfindung in Aufsicht mit einem oberflächlich angebrachten Transponder, welcher dem aus Fig. 2 vergleichbar ist,
Fig. 5 eine dritte Ausführungsform der Erfindung in Aufsicht mit einem oberflächlich angebrachten Transponder, welcher denen aus Fig. 2 und 4 vergleichbar ist,
Fig. 6 eine vierte Ausführungsform der Erfindung in Aufsicht mit einem oberflächlich angebrachten Transponder, welcher denen aus Fig. 2, 4 und 5 vergleichbar ist,
Fig. 7 eine fünfte Ausführungsform der Erfindung in Aufsicht mit einem oberflächlich angebrachten Transponder, welcher denen aus Fig. 2, 4, 5 und 6 vergleichbar ist,
Fig. 8 eine sechste Ausführungsform der Erfindung in Aufsicht mit einem oberflächlich angebrachten Transponder, welcher denen aus Fig. 2, 4, 5, 6 und 7 vergleichbar ist,
Fig. 9 eine siebte Ausführungsform der Erfindung in Aufsicht mit einem oberflächlich angebrachten Transponder von runder Geometrie;

In der nachfolgenden Beschreibung werden für gleiche oder gleich wirkende Teile die selben Bezugszeichen verwendet.

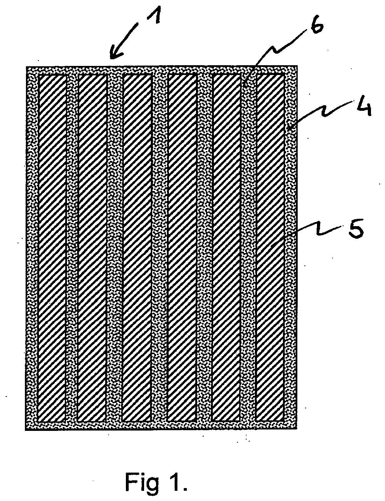

Fig. 1 zeigt eine rechteckige Magnetfeldabschirmung 1, deren Längserstreckung größer ist als deren Quererstreckung. Die rechteckige Form wird durch den Träger 4 definiert, auf welchen die Streifen 5 aus dem magnetfeldabschirmenden Material aufgebracht sind. Die Streifen 5 besitzen selbst eine rechteckige Form dergestalt, dass ihre flächige Längserstreckung deutlich größer ist als ihre Quererstreckung. Insgesamt sind sechs Streifen 5 parallel zueinander angeordnet. Zwischen den Streifen 5 befinden sich jeweils gleichmäßige Freiräume 6. Die Streifen 5 sind ferner derart angeordnet, dass sie vollständig innerhalb des Flächenabschnitts des Trägers 4 liegen. Weitere mögliche Deckschichten über den Streifen 5 oder Isolierschichten zwischen den Streifen 5 und dem Träger 4 sind hier nicht dargestellt.

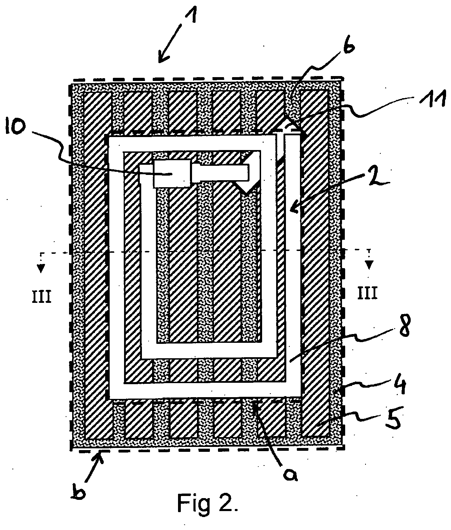

Fig. 2 zeigt eine Magnetfeldabschirmung 1, wie bereits aus Fig. 1 bekannt, wobei auf der Magnetfeldabschirmung 1 ein flächiger Transponder 2 angeordnet ist, der aus einer Antennenstruktur 8 sowie einem Mikrochip 10 und einer Antennenbrücke 11 besteht. Die Antennenbrücke 11 stellt einen elektrischen Kontakt zwischen den Endstücken der Antennestruktur 8 her. Der flächige Transponder definiert einen 1. Flächenabschnitt (a). Der Träger selbst definiert einen 2. Flächenabschnitt (b). Die Leiterbahnen der Antennenstruktur 8 des Tranponders 2 sind in rechteckiger Geometrie angeordnet, wobei die flächige Querausdehnung der Antennenstruktur 8 kleiner als deren Längsausdehnung ist. In einer erfindungsgemäßen Ausführung der Magnetfeldabschirmung 1 mit anisotroper Permeabilität verläuft die Richtung erhöhter Permeabilität parallel zu den von oben nach unten verlaufenden Längskanten der Streifen 5 und parallel zur sichtbaren Oberfläche. Alternativ hierzu kann die Richtung erhöhter Permeabilität auch senkrecht zu den Längskanten der Streifen (5) verlaufen, also parallel zu den von links nach rechts verlaufenden Leiterbahnen der Antennenstruktur (8). Auch in diesem Fall ist gewährleistet, dass eine erhöhte Permeabilität in Richtung der Leiterbahnen wesentlicher Abschnitte der Antennenstruktur (8) vorliegt. Welche Abschnitte der Antennenstruktur (8) als wesentlich gelten, ergibt sich in erster Linie aus der Geometrie der Antennenstruktur (8). Im vorliegenden Falle einer rechteckigen Antennenstruktur (8) sind sowohl die von oben nach unten verlaufenden Leiterbahnen als auch die von links nach rechts verlaufenden Leiterbahnen zu den wesentlichen Abschnitten der Antennenstruktur (8) zu rechnen.

Die Antennenstruktur 8 ist mit dem Mikrochip 10 derart verschaltet, dass nach Resonanzanregung der Antennenstruktur 8, deren Endstücke über die Antennenbrücke 11 elektrisch leitend verbunden sind, der Mikrochip 10 ein Antennensignal verarbeiten kann. Die Antennenstruktur 8 ist ferner als Spule ausgebildet, welcher eine induktive Kopplung mit einem von außen eingestrahlten magnetischen Feld erlaubt. Hierzu wird die Antennenstruktur 8 mit einer Kapazität zu einem Schwingkreis angeordnet, wobei der Mikrochip 10 auf die Arbeitsfrequenz des Schwingkreises abgestimmt ist und über den angeregten Schwingkreis mit Energie versorgt wird. Die auf dem Mikrochip 10 gespeicherten Daten können beispielsweise durch eine Dämpfungsmodulation des eingestrahlten Magnetfeldes übermittelt und ausgelesen werden. Antennenstruktur 8, Antennenbrücke 11 und Mikrochip 10 können mit der Magnetfeldabschirmung direkt verbunden sein, oder jedoch über eine Isolierschicht, welche in Fig. 2 nicht explizit dargestellt ist. Sollte eine Verbindung ohne Isolierschicht vorgesehen sein, so muss das Abschirmungsmaterial der Streifen 5 nicht elektrisch leitend sein, um keinen elektrischen Kurzschluss mit der leitenden Antennenstruktur 8 herzustellen. Alternativ zu einer Isolierschicht zwischen den Streifen 5 und der Antennenstruktur 8 könnte man sich auch eine Isolierschicht verwenden, welche lediglich die Antennenstruktur umgibt und somit einen elektrischen Kontakt nach Außen hin unmöglich macht.

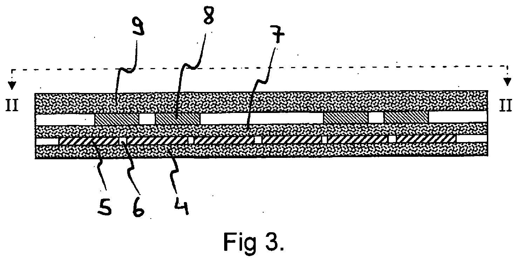

Fig. 3 stellt einen Querschnitt durch die Anordnung aus Fig. 2 entlang der Linie III - III mit Transponder 2 und Magnetfeldabschirmung 1 dar. Ebenso verweist in Fig. 3 die Linie II - II auf die entsprechende Position der Ansicht in Fig. 2. In Fig. 3 ist zunächst von unten nach oben der Träger 4 dargestellt, auf welchem direkt die Streifen 5 aus magnetfeldabschirmendem Material, mit Freiräumen 6 zwischen diesen aufgebracht sind. Über den Streifen 5 befindet sich eine Isolatorschicht 7, auf welcher ihrerseits der Transponder aufgebracht ist. In Fig. 3 sind lediglich die Querschnitte der Leiterbahnen der Antennenstruktur 8 dargestellt. Auf den Leiterbahnen der Antennenstruktur 8 des Transponders 2 ist ein Deckmaterial 9 angeordnet, welches die Antennestruktur 8 nach oben abdeckt. Die Verbindung der einzelnen Schichten ist nicht weiter dargestellt, kann aber beispielsweise im vorliegenden Fall direkt über Klebeverbindungen erfolgen.

In der vorliegenden Ausführungsform sind die seitlichen Randbereiche der gesamten Anordnung nicht durch ein Verfüll- oder Klebematerial abgeschlossen, und bilden zusammen mit den übrigen Elementen folglich keine vollständig abgeschlossene Einheit. Dennoch wäre ein solches Verfüllen oder Abschließen denkbar. Darüber hinaus wäre es auch denkbar, dass Stabilisierungselemente oder Formelemente in die dargestellte Schichtabfolge mit eingefügt werden, welche anwendungsspezifischen Anforderungen an die Anordnung Rechnung tragen können. Beispielsweise könnten seitliche Verstärkungen in die Schichtabfolge der Anordnung mit integriert werden, um die Anordnung zu stabilisieren. Ebenso könnten Formelemente integriert werden, welche die gesamte Anordnung an eine spezifische Oberflächentopographie anpassen.

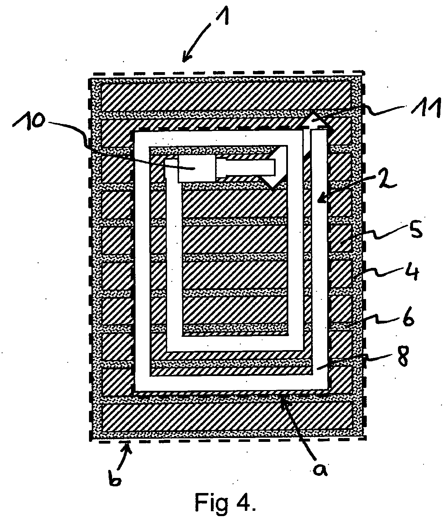

Fig. 4 stellt eine zweite Ausführungsform der Magnetfeldabschirmung 1 dar, wobei der auf der Magnetfeldabschirmung 1 angebrachte Transponder 2 dem aus Fig. 2 entspricht. Der flächige Transponder definiert wieder einen 1. Flächenabschnitt (a). Der Träger definiert wiederum einen 2. Flächenabschnitt (b). Der wesentliche Unterschied zwischen der dargestellten Magnetfeldabschirmung 1 und derjenigen aus Fig. 2 liegt in der Queranordnung der Streifen 5, welche seitlich mit entsprechenden Freiräumen 6 in paralleler Weise zueinander angeordnet sind. In der dargestellten Ausführungsform der Magnetfeldabschirmung 1 sind insgesamt 10 Streifen 5 vorgesehen. Entscheidend in der vorliegenden Anordnung ist jedoch, dass, falls eine anisotrope Permeabilität des Abschirmungsmaterials vorgesehen ist, die erhöhte Permeabilität des Abschirmungsmaterials nicht ausschließlich entlang der Längskanten der Streifen 5 und parallel zur sichtbaren Oberfläche verlaufen kann. Erfindungsgemäß ist dann etwa eine erhöhte Permeabilität senkrecht zu den Längskanten der Streifen 5 parallel zu den sichtbaren Oberflächen vorgesehen.

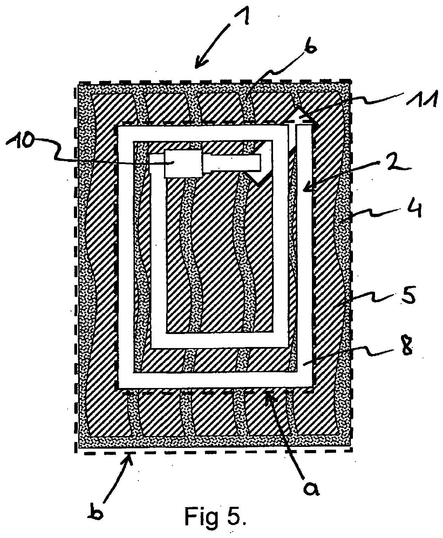

Fig. 5 stellt eine dritte Ausführungsform der Magnetfeldabschirmung 1 dar, wobei der auf der Magnetfeldabschirmung 1 angebrachte Transponder 2 wiederum im Aufbau dem aus Fig. 2 entspricht. Der zentrale Unterschied zwischen der dargestellten Magnetfeldabschirmung 1 und der aus Fig. 2 oder Fig. 4 liegt in der wellenförmigen Form der Streifen 5, welche längs mit entsprechenden Freiräumen 6 in paralleler Weise zueinander auf dem Träger 4 angeordnet sind. In der dargestellten Ausführungsform von Fig. 5 sind insgesamt 5 Streifen vorgesehen, welche aber in ihrer Zahl beliebig erfindungsgemäß geändert werden können. Entscheidend an der vorliegenden Anordnung ist, dass, falls eine anisotrope Permeabilität des Abschirmungsmaterials vorgesehen ist, für eine erfindungsgemäße Ausführung der Magnetfeldabschirmung 1 eine Richtung erhöhter Permeabilität nicht ausschließlich der Wellenstruktur der Streifen 5 folgen darf, sondern beispielsweise im wesentlichen der Orientierung der von oben nach unten verlaufenden Leiterbahnen der Antennenstruktur 8 folgt.

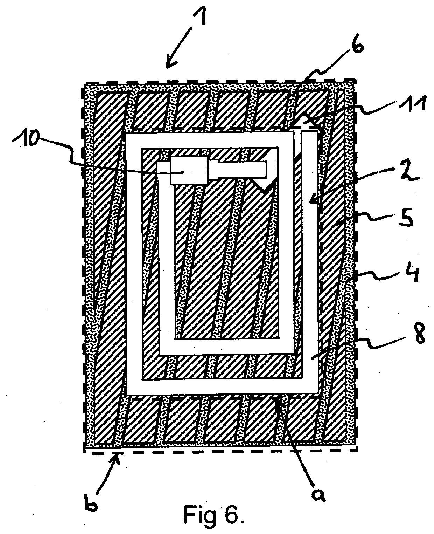

Der selbe Gedanke wird auch in Fig. 6 veranschaulicht, welche eine zur Antennenstruktur 8 schräge Anordnung der Streifen 5 darstellt. Wiederum entspricht der in Fig. 6 gezeigt Transponder 2 den zuvor dargestellten Transpondern 2 aus Fig. 2, 4 und 5. Auch in der dargestellten Anordnung ist beispielsweise eine erhöhte Permeabilität in erster Linie an der Ausrichtung der von oben nach unten verlaufenden Leiterbahnen der Antennenstruktur 8 des Transponders 2 orientiert, falls eine anisotrope Permeabilität des Abschirmungsmaterials vorgesehen ist.

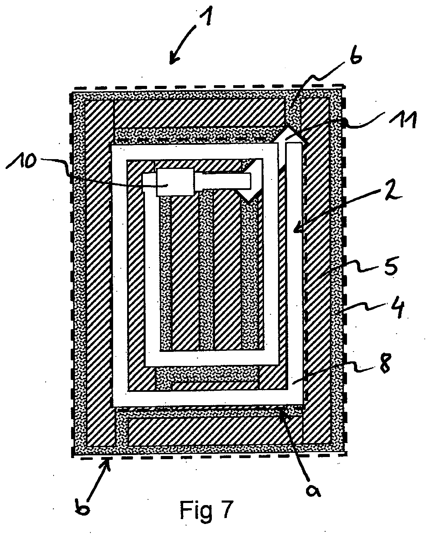

Fig. 7 veranschaulicht eine weitere erfindungsgemäß mögliche Ausführungsform der Magnetfeldabschirmung 1, welche eine L-förmige Streifenform für die zwei äußersten Streifen 5, bezogen auf den Rand des Trägers 4, vorsieht. Durch eine derartige Anordnung kann gewährleistet werden, dass die Streifen 5 in wesentlichen Abschnitten zueinander parallel ausgerichtet sind, wobei die Längskanten der Streifen 5 in der Stromflussrichtung, insbesondere in Richtung der Leiterbahnen wesentlicher Abschnitte der Antennenstruktur 8 verlaufen.

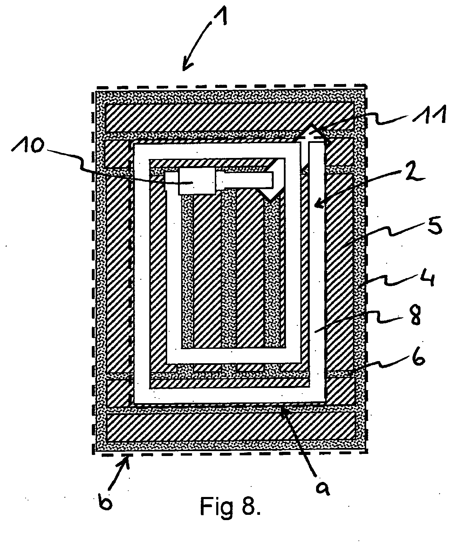

Fig. 8 veranschaulicht eine weitere Variante einer erfindungsgemäßen Ausführungsform der Magnetfeldabschirmung 1. In dieser Ausführungsform verlaufen die Streifen 5 in solchen Bereichen von oben nach unten, in welchen auch die Leiterbahnen der Antennenstruktur 8 einen solchen Verlauf aufweisen. In den übrigen Bereichen verlaufen die Streifen 5 von links nach rechts, wo auch die Leiterbahnen der Antennenstruktur 8 einen Verlauf von links nach rechts aufweisen. Folglich ist durch diese Anordnung auch gewährleistet, dass die Streifen 5 in wesentlichen Abschnitten zueinander parallel ausgerichtet sind, wobei die Längskanten der Streifen 5 in der Stromflussrichtung, insbesondere in Richtung der Leiterbahnen wesentlicher Abschnitte der Antennenstruktur 8 verlaufen.

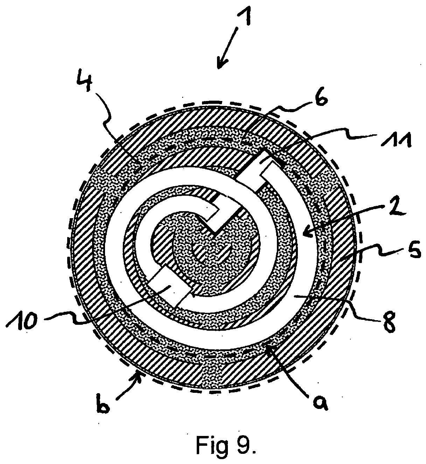

Eine alternative Gesamtgeometrie einer erfindungsgemäßen Magnetfeldabschirmung 1 wird in Fig. 9 aufgezeigt. In der dargestellten Anordnung ist der Träger 4 kreisförmig ausgestaltet. Auf dem Träger 4 sind ringsegmentförmige Streifen 5 konzentrisch angeordnet, mit konstanten Freiräumen 6 zwischen diesen. Eine ringsegmentförmige Anordnung hat im Gegensatz zu einer rein ringförmigen Anordnung, den Vorteil, dass ein in den Ringen induziertes Gegenfeld verhindert wird. In der dargestellten Anordnung sind 4 Streifen 5 vorgesehen, wobei deren Zahl von einem Fachmann beliebig abgeändert werden kann. Auf dem Träger 4 mit Streifen 5 ist eine im wesentlichen spiralige, flache Antennenstruktur 8 angeordnet, welche mit einem Mikrochip 10 zu einem Transponder 2 verschaltet ist. Auch in dieser Geometrie definiert der flächige Transponder wieder einen 1. Flächenabschnitt (a). Der Träger definiert wiederum einen 2. Flächenabschnitt (b). Falls eine anisotrope Permeabilität des Abschirmungsmaterials vorgesehen ist, folgt in einer erfindungsgemäßen Ausführung eine erhöhte Permeabilität der Streifen 5 im wesentlichen den Leiterbahnen der Antennenstruktur 8.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Magnetfeldabschirmung
- 2: RFID-Transponder

- 4: Träger
- 5: Streifen
- 6: Freiraum
- 7: Isolatorschicht
- 8: Antennenstruktur
- 9: Deckmaterial
- 10: Mikrochip
- 11: Antennenbrücke

- a 1.: Flächenabschnitt
- b 2.: Flächenabschnitt

## Patentansprüche

1. Vorrichtung zur Magnetfeldabschirmung (1) eines RFID-Transponders (2) gegenüber einem Untergrund, welcher auf einem 1. Flächenabschnitt (a) wenigstens eine flache Antennenstruktur (8) umfasst, die Leiterbahnen zum Leiten von Strom in einer Stromflussrichtung umfasst und eine anwendungsspezifische Ausdehnung aufweist, wobei die Vorrichtung einen 2. Flächenabschnitt (b) oder Träger (4) umfasst, auf welchem Streifen (5) eines hochpermeablen Abschirmungsmaterials in vorbestimmter Weise zueinander ausgerichtet aufgebracht sind, wobei der 2. Flächenabschnitt (b) zu dem 1. Flächenabschnitt (a) parallel angeordnet ist,
**dadurch gekennzeichnet, dass**
das hochpermeable Abschirmungsmaterial eine anisotrope Permeabilität aufweist, wobei eine erhöhte Permeabilität in der Stromflussrichtung in Richtung der Leiterbahnen wesentlicher Abschnitte der Antennenstruktur (8) vorgesehen ist.

2. Vorrichtung zur Magnetfeldabschirmung (1) eines RFID-Transponders (2), welcher auf einem 1. Flächenabschnitt (a) wenigstens eine flache Antennenstruktur (8) umfasst, die Leiterbahnen zum Leiten von Strom in einer Stromflussrichtung umfasst und eine anwendungsspezifische Ausdehnung aufweist, wobei die Vorrichtung einen 2. Flächenabschnitt (b) oder Träger (4) umfasst, auf welchem Streifen (5) eines hochpermeablen Abschirmungsmaterials in vorbestimmter Weise zueinander ausgerichtet aufgebracht sind, wobei der 2. Flächenabschnitt (b) zu dem 1. Flächenabschnitt (a) parallel angeordnet ist,
**dadurch gekennzeichnet, dass**
die Streifen (5) in wesentlichen Abschnitten zueinander parallel ausgerichtet und durch Freiräume (6) zwischen Längskanten der Streifen (5) beabstandet sind, wobei die Längskanten der Streifen (5) in der Stromflussrichtung in Richtung der Leiterbahnen wesentlicher Abschnitte der Antennenstruktur (8) vorgesehen sind und das Abschirmungsmaterial der Streifen (5) elektrisch leitend ist.

3. Vorrichtung nach Anspruch 1,
**dadurch gekennzeichnet, dass**
die Streifen (5) im Wesentlichen zueinander parallel ausgerichtet und durch Freiräume (6) zwischen Längskanten der Streifen (5) beabstandet sind.

4. Vorrichtung nach einem der Ansprüche 1 bis 3,
**dadurch gekennzeichnet, dass**
das Abschirmungsmaterial eine elektrische Leitfähigkeit aufweist, die geringer ist, als die des Untergrundes, auf welchen die Magnetfeldabschirmung (1) aufgebracht wird.

5. Vorrichtung nach einem der Ansprüche 1 bis 4,
**dadurch gekennzeichnet, dass**
das Abschirmungsmaterial eine elektrische Leitfähigkeit aufweist, die geringer als die Leitfähigkeit des Materials der Antennenstruktur (8) ist.

6. Vorrichtung nach einem der Ansprüche 1 bis 5,
**dadurch gekennzeichnet, dass**
das Abschirmungsmaterial einen spezifischen Widerstand von wenigstens 10⁻⁸ Ωm und von höchstens 10⁻² Ωm hat.

7. Vorrichtung nach einem der Ansprüche 1 bis 6,
**dadurch gekennzeichnet, dass**
das Abschirmungsmaterial Eisen, Nickel, Kobalt, Gadolinium, Verbindungen der Stoffgruppe der Granate, wie Yttrium-Aluminium-Verbindungen, Legierungen aus den genannten Stoffen oder Samarium umfasst, sowie amorphe Metalle.

8. Vorrichtung nach einem der Ansprüche 1 bis 7,
**dadurch gekennzeichnet, dass**
das Abschirmungsmaterial ein weichmagnetisches Metall mit geringen Ummagnetisierungsverlusten umfasst.

9. Vorrichtung nach einem der Ansprüche 1 bis 8,
**dadurch gekennzeichnet, dass**
das Abschirmungsmaterial nano-kristalline Strukturen umfasst.

10. Vorrichtung nach einem der Ansprüche 1 bis 9,
**dadurch gekennzeichnet, dass**
die Streifen (5) flexibel ausgebildet sind und eine Dicke von weniger als 500 µm aufweisen.

11. Vorrichtung nach einem der Ansprüche 1 bis 10,
**dadurch gekennzeichnet, dass**
die Streifen (5) in mehreren, durch Isolatorschichten getrennten Schichten übereinander angeordnet sind.

12. Vorrichtung nach einem der Ansprüche 1 bis 11,
**dadurch gekennzeichnet, dass**
der Träger (4) aus einem im Wesentlichen elektrisch nicht-leitenden Material besteht.

13. Vorrichtung nach einem der Ansprüche 1 bis 12,
**dadurch gekennzeichnet, dass**
der Träger (4) als Inlay eines RFID-Transponders (2) ausgebildet ist.

14. Vorrichtung nach einem der Ansprüche 1 bis 13,
**dadurch gekennzeichnet, dass**
der Träger (4) mit dem auf ihm befestigten RFID-Transponder (2) in Kunststoff, Papier oder Folienlaminat eingeschlossen ist, wobei wenigstens eine Isolatorschicht (7) zwischen Träger (4) und RFID-Transponder (2) vorgesehen ist.

15. Vorrichtung nach einem der Ansprüche 1 bis 14,
**dadurch gekennzeichnet, dass**
ein Flächenabschnitt, welcher von den Streifen (5) auf dem 2. Flächenabschnitt (b) eingenommen wird, mindestens so groß ist wie der 1. Flächenabschnitt (a) und diesen überdeckt.

16. Vorrichtung nach einem der Ansprüche 1 bis 15,
**dadurch gekennzeichnet, dass**
der RFID-Transponder (2) im HF-Frequenzbereich bei 13,56 MHz arbeitet.

17. Verfahren zur Herstellung einer Magnetfeldabschirmung (1) eines RFID-Transponders (2), welcher auf einem 1. Flächenabschnitt (a) wenigstens eine flache Antennenstruktur (8) umfasst, die Leiterbahnen zum Leiten von Strom in einer Stromflussrichtung umfasst und eine anwendungsspezifische Ausdehnung aufweist, wobei das Verfahren das Bereitstellen eines 2. Flächenabschnitts (b) oder Trägers (4) umfasst, auf welchem Streifen (5) eines hochpermeablen Abschirmungsmaterials in vorbestimmter Weise zueinander ausgerichtet aufgebracht sind, wobei der 2. Flächenabschnitt (b) zu dem 1. Flächenabschnitt (a) parallel angeordnet ist,
**dadurch gekennzeichnet, dass**
das hochpermeable Abschirmungsmaterial mit einer anisotropen Permeabilität hergestellt wird, wobei das Abschirmungsmaterial derart relativ zur Antennenstruktur (8) ausgerichtet wird, dass sich eine erhöhte Permeabilität in der Stromflussrichtung in Richtung der Leiterbahnen wesentlicher Abschnitte der Antennenstruktur (8) ergibt.

18. Verfahren zur Herstellung einer Magnetfeldabschirmung (1) eines RFID-Transponders (2), welcher auf einem 1. Flächenabschnitt (a) wenigstens eine flache Antennenstruktur (8) umfasst, die Leiterbahnen zum Leiten von Strom in einer Stromflussrichtung umfasst und eine anwendungsspezifische Ausdehnung aufweist, wobei das Verfahren das Bereitstellen eines 2. Flächenabschnitts (b) oder Trägers (4) umfasst, auf welchem Streifen (5) eines hochpermeablen Abschirmungsmaterials in vorbestimmter Weise zueinander ausgerichtet aufgebracht sind, wobei der 2. Flächenabschnitt (b) zu dem 1. Flächenabschnitt (a) parallel angeordnet ist,
**dadurch gekennzeichnet, dass**
die Streifen (5) in wesentlichen Abschnitten zueinander parallel ausgerichtet und durch Freiräume (6) zwischen Längskanten der Streifen (5) beabstandet werden, wobei die Längskanten der Streifen (5) in der Stromflussrichtung in Richtung der Leiterbahnen wesentlicher Abschnitte der Antennenstruktur (8) vorgesehen werden und das Abschirmungsmaterial der Streifen (5) elektrisch leitend ist.

19. Verfahren nach Anspruch 17,
**dadurch gekennzeichnet, dass**
die Streifen (5) im Wesentlichen zueinander parallel ausgerichtet und durch Freiräume (6) zwischen Längskanten der Streifen (5) beabstandet werden.

20. Verfahren nach einem der Ansprüche 17 bis 19,
**dadurch gekennzeichnet, dass**
das Abschirmungsmaterial eine elektrische Leitfähigkeit aufweist, die geringer ist, als die des Untergrundes, auf welchen die Magnetfeldabschirmung (1) aufgebracht wird.

21. Verfahren nach einem der Ansprüche 17 bis 20,
**dadurch gekennzeichnet, dass**
die Streifen (5) durch Ätzen eines vollflächigen Abschirmungsmaterials hergestellt werden.

22. Verfahren nach Anspruch 21,
**dadurch gekennzeichnet, dass**
das vollflächige Abschirmungsmaterial auf den Träger (4) in einem Rolle-zu-Rolle Prozess auflaminiert wird.

23. Verfahren nach einem der Ansprüche 17 bis 20,
**dadurch gekennzeichnet, dass**
die Streifen (5) auf den Träger (4) in einem Rolle-zu-Rolle Prozess auflaminiert werden.

24. Verfahren nach einem der Ansprüche 17 bis 20,
**dadurch gekennzeichnet, dass**
die Streifen (5) durch ein spanendes mechanisches Formgebungsverfahren hergestellt werden.

25. Verfahren nach einem der Ansprüche 17 bis 20,
**dadurch gekennzeichnet, dass**
die Streifen (5) durch ein nichtspanendes mechanisches Formgebungsverfahren hergestellt werden.

26. Verfahren nach einem der Ansprüche 17 bis 20,
**dadurch gekennzeichnet, dass**
die Streifen (5) durch ein nasschemisches Verfahren hergestellt werden.

27. Verfahren nach einem der Ansprüche 17 bis 20,
**dadurch gekennzeichnet, dass**
die Streifen (5) durch physikalisches oder chemisches Abscheiden des Abschirmungsmaterials auf dem Träger (4) hergestellt werden.

28. Verfahren nach einem der Ansprüche 17 bis 20,
**dadurch gekennzeichnet, dass**
eine Anisotropie der Permeabilität des hochpermeablen Materials mittels eines magnetischen Richtfeldes induziert oder verstärkt wird.

29. Verfahren nach einem der Ansprüche 17 bis 28,
**dadurch gekennzeichnet, dass**
die Fixierung der Streifen (5) auf dem Träger (4) mittels eines Klebers oder eines Lackes erfolgt.

30. Verfahren nach einem der Ansprüche 17 bis 29,
**dadurch gekennzeichnet, dass**
der Träger (4) nach dem Fixieren der Streifen (5) auf ihm mit dem RFID-Transponder (2) verbunden wird.

31. Verfahren nach einem der Ansprüche 17 bis 30,
**dadurch gekennzeichnet, dass**
der Träger (4) vor dem Fixieren der Streifen (5) auf ihm mit dem RFID-Transponder (2) verbunden wird.

32. Verfahren nach einem der Ansprüche 17 bis 31,
**dadurch gekennzeichnet, dass**
die Verbindung von RFID-Transponder (2) und Vorrichtung zur Magnetfeldabschirmung (1) mittels Falten, Laminieren oder eines Verkapselungsverfahrens erfolgt.

33. Verwendung einer Vorrichtung zur Magnetfeldabschirmung (1) eines RFID-Transponders (2) nach einem der Ansprüche 1 bis 16,
zur Verringerung von durch Wirbelstromverluste verursachten Funktionseinbußen des RFID-Transponders (2).

## Claims

1. An apparatus for magnetic field screening (1) of an RFID transponder (2) from a substrate comprising, on a first area section (a), at least one flat antenna structure (8) which comprises conductor tracks for conducting current in a direction of current flow and has an application-specific extent, wherein the apparatus comprises a second area section (b) or carrier (4) to which strips (5) of highly permeable screening material are applied to be oriented with respect to one another in a predetermined manner, wherein the second area section (b) is arranged in parallel to the first area section (a),
**characterized in that**
the highly permeable screening material has anisotropic permeability, wherein increased permeability is provided in the direction of current flow in the direction of conductor tracks of substantial sections of the antenna structure (8).

2. An apparatus for magnetic field screening (1) of an RFID transponder (2) comprising, on a first area section (a), at least one flat antenna structure (8) which comprises conductor tracks for conducting current in a direction of current flow and has an application-specific extent, wherein the apparatus comprises a second area section (b) or carrier (4) to which strips (5) of highly permeable screening material are applied such that they are oriented with respect to one another in a predetermined manner, wherein the second area section (b) is arranged parallel to the first area section (a),
**characterized in that**
the strips (5) are oriented in parallel to one another in substantial sections and are spaced apart by free spaces (6) between longitudinal edges of the strips (5), wherein the strips' (5) longitudinal edges are provided in the direction of current flow in the direction of conductor tracks of substantial sections of the antenna structure (8), and the strips' (5) screening material is electrically conducting.

3. The apparatus according to claim 1,
**characterized in that**
the strips (5) are oriented substantially in parallel to one another and spaced apart by free spaces (6) between the strips' (5) longitudinal edges.

4. The apparatus according to any one of claims 1 to 3,
**characterized in that**
the screening material exhibits an electrical conductivity which is lower than that of the substrate to which the magnetic field screening (1) will be applied.

5. The apparatus according to any one of claims 1 to 4,
**characterized in that**
the screening material exhibits an electrical conductivity which is lower than the conductivity of the antenna structure's (8) material.

6. The apparatus according to any one of claims 1 to 5,
**characterized in that**
the screening material has a specific resistance of at least 10⁻⁸ Ωm and of at most 10⁻² Ωm.

7. The apparatus according to any one of claims 1 to 6,
**characterized in that**
the screening material comprises iron, nickel, cobalt gadolinium, compounds from the group of substances of garnets, such as yttrium aluminum compounds, alloys of the cited substances, or samarium, as well as amorphous metals.

8. The apparatus according to any one of claims 1 to 7,
**characterized in that**
the screening material comprises a magnetically soft material having low hysteresis losses.

9. The apparatus according to any one of claims 1 to 8,
**characterized in that**
the screening material comprises nano-crystalline structures.

10. The apparatus according to any one of claims 1 to 9,
**characterized in that**
the strips (5) are formed to be flexible and have a thickness of less than 500 µm.

11. The apparatus according to any one of claims 1 to 10,
**characterized in that**
the strips (5) are arranged to be superimposed in several layers separated by insulator layers.

12. The apparatus according to any one of claims 1 to 11,
**characterized in that**
the carrier (4) is made of a material of substantially electrical non-conductivity.

13. The apparatus according to any one of claims 1 to 12,
**characterized in that**
the carrier (4) is formed as an inlay of an RFID transponder (2).

14. The apparatus according to any one of claims 1 to 13,
**characterized in that**
the carrier (4), together with the RFID transponder (2) attached to it, is enclosed in plastics, paper or foil laminate, with at least one insulator layer (7) being provided between carrier (4) and RFID transponder (2).

15. The apparatus according to any one of claims 1 to 14,
**characterized in that**
an area section occupied by the strips (5) on the second area section (b) is at least as large as and overlaps the first area section (a).

16. The apparatus according to any one of claims 1 to 15,
**characterized in that**
the RFID transponder (2) operates in the RF frequency range at 13.56 MHz.

17. A method for manufacturing a magnetic field screening (1) of an RFID transponder (2) which comprises, on a first area section (a), at least one flat antenna structure (8) which comprises conductor tracks for conducting current in a direction of current flow and has an application-specific extent, wherein the method comprises the providing of a second area section (b) or carrier (4) to which strips (5) of highly permeable screening material are applied to be oriented with respect to one another in a predetermined manner, wherein the second area section (b) is arranged in parallel to the first area section (a),
**characterized in that**
the highly permeable screening material is fabricated to have anisotropic permeability, wherein the screening material is oriented relative to the antenna structure (8) such that the result is increased permeability in the direction of current flow in the direction of conductor tracks of substantial sections of the antenna structure (8).

18. A method for manufacturing a magnetic field screening (1) of an RFID transponder (2) which comprises, on a first area section (a), at least one flat antenna structure (8) which comprises conductor tracks for conducting current in a direction of current flow and has an application-specific extent, wherein the method comprises the providing of a second area section (b) or carrier (4) to which strips (5) of highly permeable screening material are applied to be oriented with respect to one another in a predetermined manner, wherein the second area section (b) is arranged in parallel to the first area section (a),
**characterized in that**
the strips (5) are oriented in parallel to one another in substantial sections and are spaced apart by free spaces (6) between longitudinal edges of the strips (5), wherein the strips' (5) longitudinal edges are provided in the direction of current flow of substantial sections of the antenna structure (8), and the strips' (5) screening material is electrically conducting.

19. The method according to claim 17,
**characterized in that**
the strips (5) are oriented substantially in parallel to one another and spaced apart by free spaces (6) between the strips' (5) longitudinal edges.

20. The method according to any one of claims 17 to 19,
**characterized in that**
the screening material exhibits an electrical conductivity which is lower than that of the substrate to which the magnetic field screening (1) will be applied.

21. The method according to any one of claims 17 to 20,
**characterized in that**
the strips (5) are produced by etching a full-area screening material.

22. The method according to claim 21,
**characterized in that**
the continuous screening material is laminated onto the carrier (4) in a roll-to-roll process.

23. The method according to any one of claims 17 to 20,
**characterized in that**
the strips (5) are laminated onto the carrier (4) in a roll-to-roll process.

24. The method according to any one of claims 17 to 20,
**characterized in that**
the strips (5) are produced by a machining mechanical forming process.

25. The method according to any one of claims 17 to 20,
**characterized in that**
the strips (5) are produced by a non-machining mechanical forming process.

26. The method according to any one of claims 17 to 20,
**characterized in that**
the strips (5) are produced by a wet chemical process.

27. The method according to any one of claims 17 to 20,
**characterized in that**
the strips (5) are produced by physically or chemically depositing the screening material on the carrier (4).

28. The method according to any one of claims 17 to 20,
**characterized in that**
an anisotropy of the highly permeable material's permeability is induced or enhanced by a directional magnetic field.

29. The method according to any one of claims 17 to 28,
**characterized in that**
the strips' (5) fixing on the carrier (4) is performed by means of an adhesive or varnish.

30. The method according to any one of claims 17 to 29,
**characterized in that**
after fixing the strips (5) on the carrier (4), the carrier (4) is associated with the RFID transponder (2).

31. The method according to any one of claims 17 to 30,
**characterized in that**
prior to fixing the strips (5) on the carrier (4), the carrier (4) is associated with the RFID transponder (2).

32. The method according to any one of claims 17 to 31,
**characterized in that**
the associating of RFID transponder (2) and apparatus for magnetic field screening (1) is performed by means of folding, laminating or an encapsulation process.

33. Use of an apparatus for magnetic field screening (1) of an RFID transponder (2) according to any one of claims 1 to 16,
to reduce functional deficits of the RFID transponder (2) that are caused by eddy current losses.

## Revendications

1. Dispositif pour le blindage vis-à-vis des champs magnétiques (1) d'un transpondeur RFID (2) par rapport à une base sous-jacente, qui inclut sur une première portion de surface (a) au moins une structure d'antenne plane (8) qui inclut des pistes conductrices pour conduire un courant dans une direction d'écoulement de courant et qui présente une extension spécifique à l'application, dans lequel le dispositif inclut une seconde portion de surface (b) ou un support (4) sur lequel sont appliquées des bandes (5) d'un matériau de blindage hautement perméable lesquelles sont orientées les unes par rapport aux autres d'une manière prédéterminée, dans lequel la seconde portion de surface (b) est agencée parallèlement à la première portion de surface (a),
**caractérisé en ce que**
le matériau de blindage hautement perméable présente une perméabilité anisotrope, de sorte qu'il est prévu une perméabilité plus élevée dans la direction d'écoulement du courant en direction des pistes conductrices de portions essentielles de la structure d'antenne (8).

2. Dispositif pour le blindage vis-à-vis des champs magnétiques (1) d'un transpondeur RFID (2), qui inclut sur une première portion de surface (a) au moins une structure d'antenne plane (8), qui inclut des pistes conductrices pour conduire un courant dans une direction d'écoulement de courant et qui présente une extension spécifique à l'application, dans lequel le dispositif inclut une seconde portion de surface (b) ou un support (4), sur lequel sont appliquées des bandes (5) d'un matériau de blindage hautement perméable, lesquelles sont orientées les unes par rapport aux autres d'une manière prédéterminée, dans lequel la seconde portion de surface (b) est agencée parallèlement à la première portion de surface (a),
**caractérisé en ce que**
les bandes sont orientées parallèlement les unes aux autres dans des portions essentielles et sont écartées par des espaces libres (6) entre les bords longitudinaux des bandes (5), dans lequel les bords longitudinaux des bandes (5) sont prévus dans la direction d'écoulement du courant en direction des pistes conductrices de portions essentielles de la structure d'antenne (8), et le matériau de blindage des bandes (5) est conducteur de l'électricité.

3. Dispositif selon la revendication 1,
**caractérisé en ce que** les bandes (5) sont orientées essentiellement parallèlement les unes aux autres et sont écartées par des espaces libres (6) entre les bords longitudinaux des bandes (5).

4. Dispositif selon l'une des revendications 1 à 3,
**caractérisé en ce que** le matériau de blindage présente une conductibilité électrique qui est plus faible que celle du matériau sous-jacent sur lequel le blindage vis-à-vis des champs magnétiques (1) est appliqué.

5. Dispositif selon l'une des revendications 1 à 4,
**caractérisé en ce que** le matériau de blindage présente une conductibilité électrique qui est plus faible que la conductibilité du matériau de la structure d'antenne (8).

6. Dispositif selon l'une des revendications 1 à 5,
**caractérisé en ce que** le matériau de blindage possède une résistance spécifique d'au moins 10⁻⁸ Ωm et au maximum 10⁻² Ωm.

7. Dispositif selon l'une des revendications 1 à 6,
**caractérisé en ce que** le matériau de blindage contient du fer, nickel, cobalt, gadolinium, des composés du groupe des matériaux des grenats, tels que les composés yttrium-aluminium, des alliages des matériaux précités ou du samarium, ainsi que des métaux amorphes.

8. Dispositif selon l'une des revendications 1 à 7,
**caractérisé en ce que** le matériau de blindage inclut un métal magnétique doux avec des faibles pertes magnétiques.

9. Dispositif selon l'une des revendications 1 à 8,
**caractérisé en ce que** le matériau de blindage inclut des structures nanocristallines.

10. Dispositif selon l'une des revendications 1 à 9,
**caractérisé en ce que** les bandes (5) sont réalisées flexibles et ont une épaisseur de moins de 500 µm.

11. Dispositif selon l'une des revendications 1 à 10,
**caractérisé en ce que** les bandes (5) sont agencées les unes au-dessus des autres en plusieurs couches séparées par des couches isolantes.

12. Dispositif selon l'une des revendications 1 à 11,
**caractérisé en ce que** le support (4) est en un matériau sensiblement non conducteur de l'électricité.

13. Dispositif selon l'une des revendications 1 à 12,
**caractérisé en ce que** le support (4) est réalisé sous forme d'incrustation ("inlay") d'un transpondeur RFID (2).

14. Dispositif selon l'une des revendications 1 à 13,
**caractérisé en ce que** le support (4), avec le transpondeur RFID (2) fixé sur lui-même, est enfermé dans une matière plastique, du papier ou un film stratifié, et dans lequel au moins une couche isolante (7) est prévue entre le support (4) et le transpondeur RFID (2).

15. Dispositif selon l'une des revendications 1 à 14,
**caractérisé en ce qu'**une portion de surface, qui est occupée par les bandes (5) sur la seconde portion de surface (b), est au moins aussi grande que la première portion de surface (a) et recouvre celle-ci.

16. Dispositif selon l'une des revendications 1 à 15,
**caractérisé en ce que** le transpondeur RFID (2) fonctionne dans une plage de fréquences HF vers 13,56 MHz.

17. Procédé pour la fabrication d'un blindage vis-à-vis des champs magnétiques (1) d'un transpondeur RFID (2), lequel inclut sur une première portion de surface (a) au moins une structure d'antenne plane (8), qui inclut des pistes conductrices pour conduire un courant dans une direction d'écoulement de courant et présente une extension spécifique à l'application, le procédé incluant la mise à disposition d'une seconde portion de surface (b) ou d'un support (4) sur laquelle/lequel sont appliquées des bandes (5) d'un matériau de blindage hautement perméable, en étant orientées les unes par rapport aux autres d'une manière prédéterminée, et la seconde portion de surface (b) est agencée parallèlement à la première portion de surface (a),
**caractérisé en ce que**
le matériau de blindage hautement perméable est produit avec une perméabilité anisotrope, et le matériau de blindage est orienté par rapport à la structure d'antenne (8) d'une manière telle qu'il en résulte une perméabilité plus élevée dans la direction d'écoulement du courant en direction des pistes conductrices de portions essentielles de la structure d'antenne (8).

18. Procédé pour la fabrication d'un blindage vis-à-vis des champs magnétiques (1) d'un transpondeur RFID (2), lequel inclut sur une première portion de surface (a) au moins une structure d'antenne plane (8), qui inclut des pistes conductrices pour conduire un courant dans une direction d'écoulement de courant et présente une extension spécifique à l'application, le procédé incluant la mise à disposition d'une seconde portion de surface (b) ou d'un support (4) sur laquelle/lequel sont appliquées des bandes (5) d'un matériau de blindage hautement perméable, en étant orientées les unes par rapport aux autres d'une manière prédéterminée, et la seconde portion de surface (b) est agencée parallèlement à la première portion de surface (a),
**caractérisé en ce que**
les bandes (5) sont orientés parallèlement les unes aux autres dans des portions essentielles et sont écartées par des espaces libres (6) entre les bords longitudinaux des bandes (5), et les bords longitudinaux des bandes (5) sont prévus dans la direction d'écoulement du courant en direction des pistes conductrices de portions essentielles de la structure d'antenne (8), et le matériau de blindage des bandes (5) est électriquement conducteur.

19. Procédé selon la revendication 17,
**caractérisé en ce que** les bandes (5) sont orientés essentiellement parallèlement les unes aux autres et sont écartées par des espaces libres (6) entre les bords longitudinaux des bandes (5).

20. Procédé selon l'une des revendications 17 à 19,
**caractérisé en ce que** le matériau de blindage présente une conductibilité électrique qui est plus faible que celle du matériau sous-jacent sur lequel le blindage vis-à-vis des champs magnétiques (1) est appliqué.

21. Procédé selon l'une des revendications 17 à 20, **caractérisé en ce que** les bandes (5) sont réalisées par attaque d'un matériau de blindage prévu sur toute la surface.

22. Procédé selon la revendication 21,
**caractérisé en ce que** le matériau de blindage est appliqué par stratification sur toute la surface sur le support (4) dans un processus dit de "rouleau-à-rouleau".

23. Procédé selon l'une des revendications 17 à 20,
**caractérisé en ce que** les bandes sont appliquées sur le support (4) par stratification dans un processus dit de "rouleau-à-rouleau".

24. Procédé selon l'une des revendications 17 à 20,
**caractérisé en ce que** les bandes (5) sont réalisées par une procédure de mise en forme mécanique avec enlèvement de matière.

25. Procédé selon l'une des revendications 17 à 20,
**caractérisé en ce que** les bandes (5) sont réalisées par une procédure de mise en forme mécanique sans enlèvement de matière.

26. Procédé selon l'une des revendications 17 à 20,
**caractérisé en ce que** les bandes (5) sont réalisées par une procédure chimique en voie humide.

27. Procédé selon l'une des revendications 17 à 20,
**caractérisé en ce que** les bandes (5) sont réalisées par déposition physique ou chimique du matériau de blindage sur le support (4).

28. Procédé selon l'une des revendications 17 à 20,
**caractérisé en ce qu'**une anisotropie de la perméabilité du matériau hautement perméable est induite ou renforcée au moyen d'un champ magnétique directif.

29. Procédé selon l'une des revendications 17 à 28,
**caractérisé en ce que** la fixation des bandes (5) sur le support (4) a lieu au moyen d'une colle ou d'une laque.

30. Procédé selon l'une des revendications 17 à 29,
**caractérisé en ce que** le support (4), après la fixation des bandes (5) sur lui-même, est relié au transpondeur RFID (2).

31. Procédé selon l'une des revendications 17 à 30,
**caractérisé en ce que** le support (4), avant la fixation des bandes (5) sur lui-même, est relié au transpondeur RFID (2).

32. Procédé selon l'une des revendications 17 à 31,
**caractérisé en ce que** la liaison du transpondeur RFID (2) et du dispositif pour le blindage vis-à-vis des champs magnétiques (1) a lieu au moyen d'un pliage, d'une stratification, ou d'une procédure d'encapsulage.

33. Utilisation d'un dispositif pour le blindage vis-à-vis des champs magnétiques (1) d'un transpondeur RFID (2) selon l'une des revendications 1 à 16, pour la réduction des pertes fonctionnelles du transpondeur RFID (1) causées par des pertes par courants de Foucault.
